(19) **Europäisches Patentamt European Patent Office Office européen des brevets**

(11) **EP 3 480 629 B1**

(12) **EUROPEAN PATENT SPECIFICATION**

(45) Date of publication and mention
of the grant of the patent:
**22.07.2020 Bulletin 2020/30**

(51) Int Cl.:
*G01W 1/00* (2006.01)  *B60C 19/00* (2006.01)
*B60W 40/068* (2012.01)  *B60C 23/04* (2006.01)
*B60C 23/06* (2006.01)  *B60T 8/172* (2006.01)

(21) Application number: **17819733.1**

(22) Date of filing: **26.05.2017**

(86) International application number:
**PCT/JP2017/019681**

(87) International publication number:
**WO 2018/003366 (04.01.2018 Gazette 2018/01)**

(54) **ROAD SURFACE STATE DETERMINATION METHOD**

VERFAHREN ZUR BESTIMMUNG DES OBERFLÄCHENZUSTANDES EINER STRASSE

PROCÉDÉ DE DÉTERMINATION DE L'ÉTAT DE LA SURFACE D'UNE ROUTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2016 JP 2016131103**

(43) Date of publication of application:
**08.05.2019 Bulletin 2019/19**

(73) Proprietor: **Bridgestone Corporation Tokyo 104-8340 (JP)**

(72) Inventors:
• **HANATSUKA Yasushi Tokyo 104-8340 (JP)**
• **GOTO Takato Tokyo 104-8340 (JP)**

(74) Representative: **Oxley, Robin John George Marks & Clerk LLP 15 Fetter Lane London EC4A 1BW (GB)**

(56) References cited:
**EP-A1- 2 883 772    EP-A2- 2 537 723**
**JP-A- 2002 511 812    JP-A- 2010 159 031**
**JP-A- 2010 159 031    JP-A- 2013 006 533**
**JP-A- 2014 035 279**

**Description**

TECHNICAL FIELD

The present invention relates to a method of determining a road surface state during travel.

BACKGROUND ART

Conventionally, as a method of determining a road surface state, a method of extracting a time series waveform for each time window by multiplying a time series waveform of tire vibration detected by an acceleration sensor by a window function of a predetermined time width, calculating a feature vector for each time window, then calculating a likelihood of the feature vector for each time window for each road surface model (hidden Markov model) constructed by using, as data for learning, data of the time series waveform of the tire vibration obtained by driving a vehicle including a tire provided with an acceleration sensor on road surfaces of a plurality of road surface states, and determining a road surface corresponding to a road surface model of the highest likelihood as a road surface state of the road surface on which the tire is traveling is proposed (for example, see Patent Literature 1).

In addition, as a method of determining a road surface state by using a road surface model, a method of calculating a kernel function from a feature vector for each time window and a road surface feature vector that has been obtained in advance, and determining a road surface state by comparing values of another function that identifies a road surface model by using this kernel function is proposed (for example, see Patent Literature 2).

CITATION LIST

PATENT LITERATURE

Patent Literature 1: Japanese Patent Application Publication No. 2013-6533
Patent Literature 2: Japanese Patent Application Publication No. 2014-3 5279.

Patent document EP 2 883 772 A1 discloses a road surface state estimation as following using time-series waveform of tire vibration detected by an acceleration sensor. As a result, the road surface condition can be determined from the time-series waveform of the tire vibration without detecting peak positions or measuring the wheel speed.

SUMMARY OF INVENTION

TECHNICAL PROBLEMS

However, in Patent Literature 1 and 2 described above, a category configuration in which a braking/driving force applied to a tire is taken into consideration is not employed, and therefore there is a problem that the determination accuracy of the road surface state during acceleration or deceleration or on an uphill slope or a downhill slope decreases.

The present invention has been made in consideration of the conventional problem, and an object thereof is to provide a method by which a road surface state can be determined with a high accuracy even in the case where a braking/driving force is applied to the tire.

SOLUTION TO PROBLEMS

The present invention is a road surface state determination method including a step (a) of detecting vibration of a tire during travel, a step (b) of extracting a time series waveform of the detected vibration of the tire, a step (c) of extracting a time series waveform for each time window by multiplying the time series waveform of the tire vibration by a window function of a predetermined time width, a step (d) of calculating each feature vector from the time series waveform for each time window, and a step (e) of determining a road surface state during travel by using the feature vector for each time window calculated in the step (d) and a road surface model constructed by using, as data for learning, data of time series waveforms of tire vibration obtained by driving, on road surfaces of a plurality of road surface states, a vehicle including a tire provided with an acceleration sensor, wherein the road surface model is constructed in a plural number in accordance with magnitudes of a braking/driving force, wherein a step of estimating a braking/driving force applied to the tire is provided, and wherein, in the step (e), a state of a road surface is determined by using the feature vector and a road surface model corresponding to a magnitude of the estimated braking/driving force.

When determining a road surface state by using a road surface model as described above, by constructing a plurality of road surface models in accordance with the magnitude of a braking/driving force, the road surface state can be determined with a high accuracy even in the case where a braking/driving force is applied to a tire.

To be noted, the summary of invention described above does not describe all features required for the present invention, and subcombinations of these features can also be the invention.

[Fig. 1] Fig. 1 is a diagram illustrating a configuration of a road surface determination apparatus according to Embodiment 1 of the present invention.

[Fig. 2] Fig. 2 is a diagram illustrating an arrangement example of an acceleration sensor.

[Fig. 3] Fig. 3 is a diagram illustrating a time series waveform of tire vibration and an extraction method for a time series waveform of tire vibration for each time window.

[Fig. 4] Fig. 4 is a diagram illustrating an example of a road surface HMM.

[Fig. 5] Fig. 5 is a diagram illustrating a road surface HMM used for likelihood calculation.

[Fig. 6] Fig. 6 is a schematic diagram of a state transition series.

[Fig. 7] Fig. 7 is a flowchart illustrating a road surface state determination method according to Embodiment 1.

[Fig. 8] Fig. 8 is a diagram illustrating a configuration of a road surface determination apparatus according to Embodiment 2.

[Fig. 9] Fig. 9 is a schematic diagram illustrating an input space.

[Fig. 10] Fig. 10 is a diagram illustrating DRY road surface feature vectors and feature vectors not of a DRY road surface in an input space.

[Fig. 11] Fig. 11 is a diagram illustrating a calculation method for a GA kernel of DRY road surface feature vectors and feature vectors not of a DRY road surface.

[Fig. 12] Fig. 12 is a diagram illustrating a calculation method for a GA kernel of calculated feature vectors and road surface feature vectors.

[Fig. 13] Fig. 13 is a flowchart illustrating a road surface determination method according to Embodiment 2.

DESCRIPTION OF EMBODIMENTS

Embodiment 1

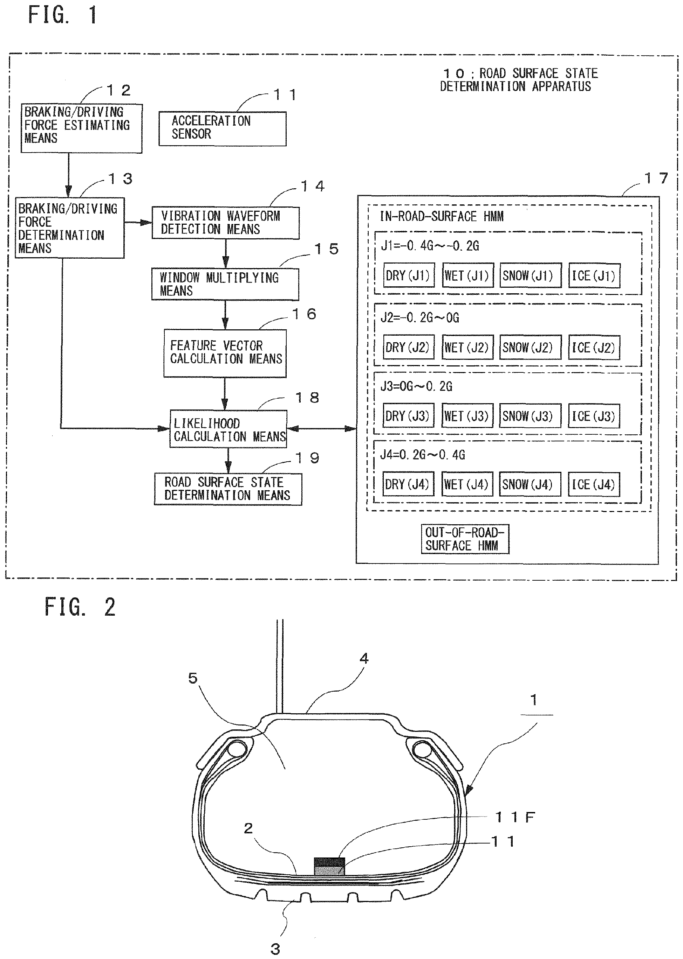

Fig. 1 is a function block diagram of a road surface state determination apparatus 10 according to the present embodiment. In this figure, 11 represents an acceleration sensor serving as a vibration detection means, 12 represents a braking/driving force estimating means, 13 represents a braking/driving force determination means, 14 represents a vibration waveform detection means, 15 represents a window multiplying means, 16 represents a feature vector calculation means, 17 represents a storage means, 18 represents a likelihood calculation means, and 19 represents a road surface state determination means.

Each means from the braking/driving force determination means 13 to the road surface state determination means 19 are, for example, constituted by computer software and a storage device such as a RAM, and disposed in a vehicle body that is not illustrated.

As illustrated in Fig. 2, the acceleration sensor 11 is disposed at the center of an inner liner portion 2 of a tire 1 in a tire width direction such that the detection direction thereof is a tire circumferential direction, and detects an acceleration rate in the tire circumferential direction input applied from a road surface to a tread 3. Hereinafter, a position of the acceleration sensor 11 (strictly, a position on the surface of the tread 3 disposed on the outside of the acceleration sensor 11 in the radial direction) will be referred to as a measurement point.

Output from the acceleration sensor 11 is, for example, transmitted to the vibration waveform detection means 14 by a transmitter 11F.

The braking/driving force estimating means 12 estimates a braking/driving force J applied to the tire. Specifically, a driving force applied to the tire is estimated from an accelerator opening and a gear position, and a braking force is estimated from a brake pedal pressing force or a brake oil pressure. $J > 0$ corresponds to a driving force and $J < 0$ corresponds to a braking force.

To be noted, the braking/driving force J applied to the tire may be estimated from either or both of information of a vehicle body acceleration rate and road surface slope information, or the braking/driving force J applied to the tire may be estimated from any or a plurality of pieces of information of vehicle body speed, wheel speed, and road surface slope information.

The braking/driving force determination means 13 determines, from the estimated braking/driving force J, whether or not the state of the tire 1 is a state in which determination of the road surface state can be performed. Specifically, in the case where the magnitude $|J|$ of the estimated braking/driving force J exceeds a threshold value $J_{Max}$,

it is determined that determination of the road surface state from the detected vibration waveform is difficult, and determination of the road surface state is stopped by transmitting a stopping instruction signal for stopping detection of the vibration waveform to the vibration waveform detection means 14.

In contrast, in the case where the magnitude $|J|$ of the estimated braking/driving force J does not exceed the threshold value $J_{Max}$ ($-J_{Max} \leq J \leq J_{Max}$), data of the braking/driving force J is output to the likelihood calculation means 18.

To be noted, it is preferable that $J_{Max}$ is within a range of 0.2 G to 0.8 G. In this example, $J_{Max}$ is 0.4 G.

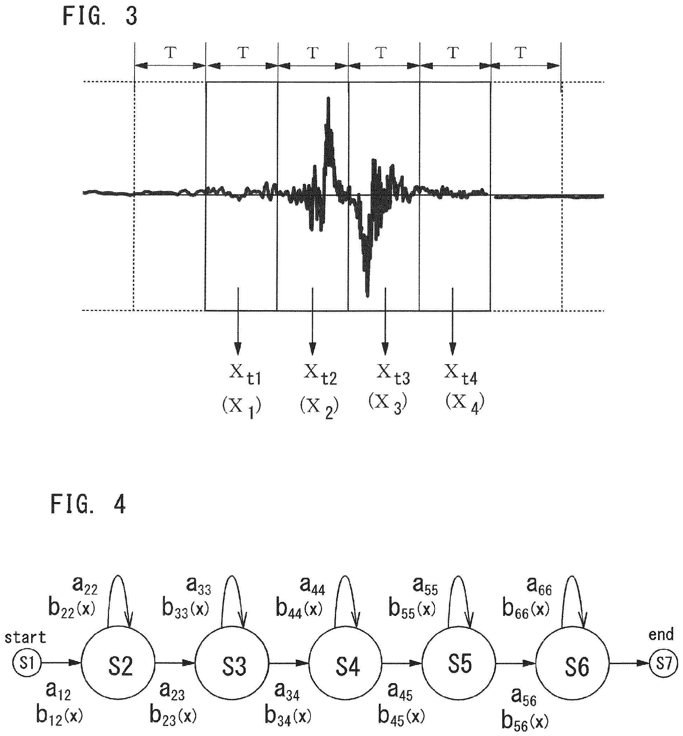

The vibration waveform detection means 14 detects a time series waveform in which vibration in the tire circumferential direction input to the tire 1 during travel, which is an output of the acceleration sensor 11, is arranged in time series as illustrated in Fig. 3.

The window multiplying means 15 subjects the time series waveform of the vibration in the tire circumferential direction to window multiplication with a preset time width (time window width) T, and thus extracts a time series waveform of tire vibration for each time window.

The feature vector calculation means 16 calculates a feature vector $X_t$ for each time series waveform extracted for each time window. In this example, as the feature vector $X_t$, vibration levels (power values of a filtered wave) $x_{kt}$ of specific frequency bands obtained by filtering each time series waveform of tire vibration by using k band pass filters BP(k) of frequency ranges of $f_{ka}$ to $f_{kb}$. The number of dimensions of a feature vector X is k, and, in this example, since the specific frequency ranges are set to six ranges of 0 to 0.5 kHz, 0.5 to 1 kHz, 1 to 2 kHz, 2 to 3 kHz, 3 to 4 kHz, and 4 to 5 kHz, k is 6.

Since the feature vector $X_t$ is obtained for each time window, when the total number of time windows is N, the number of feature vectors $X_t$ is also N.

The storage means 17 stores a plurality of hidden Markov models (hereinafter referred to as road surface HMMs) constituted for respective road surface states and braking driving forces J. A road surface HMM is composed of an in-road-surface HMM (road) and an out-of-road-surface HMM (silent). The in-road-surface HMM (road) is constituted by a vibration waveform appearing in a road surface region in the time series waveform of tire vibration, and the out-of-road-surface HMM (silent) is constituted by a waveform in a region without information.

The road surface HMM has seven states $S_1$ to $S_7$ corresponding to the time series waveform of tire vibration as illustrated in Fig. 4, and the states $S_1$ to $S_7$ are each constituted by two kinds of parameters of emission probabilities $b_{ij}(X)$ of the feature vector $X_t$ and transition probabilities $a_{ij}(X)$ between states (i, j = 1 to 7).

In this example, learning of dividing the tire vibration into five states in five states of $S_2$ to $S_6$ excluding the start state $S_1$ and the end state $S_7$ of each road surface HMM is performed to obtain the emission probabilities $b_{ij}(X)$ and the transition states $a_{ij}(X)$ between states of the feature vector X of each road surface HMM.

An emission probability $b_{ij}(X)$ represents the probability of the feature vector X being output when the state transitions from a state $S_i$ to a state $S_j$. The emission probability $b_{ij}(X)$ is assumed to have a mixed normal distribution.

A transition probability $a_{ij}(X)$ represents the probability of the state transitioning from the state $S_i$ to the state $S_j$.

To be noted, in the case where the number of dimensions of the feature vector X is k, the emission probability $b_{ij}$ is set for each of k components $x_k$ of the feature vector X.

In this example, data of time series waveform obtained in advance by driving a vehicle including the tire 1 provided with the acceleration sensor 11 on respective road surfaces of DRY, WET, SNOW, and ICE while changing the range of the braking/driving force J applied to the tire 1 is used as learning data, and thus seventeen road surface HMMs composed of sixteen in-road-surface HMMs (road) and one out-of-road-surface HMM (silent) as illustrated in FIG. 1 are constructed.

In this figure, DRY (J1) is a road surface HMM constructed by using data of a time series waveform of tire vibration obtained by driving on a DRY road surface in a range of braking/driving force J1 = -0.4 G to -0.2 G as learning data, DRY (J2) is a road surface HMM constructed by using data of a time series waveform of tire vibration obtained by driving in a range of braking/driving force J2 = -0.2 G to 0 G as learning data, DRY (J3) is a road surface HMM constructed by using data of a time series waveform of tire vibration obtained by driving in a range of braking/driving force J3 = 0 G to 0.2 G as learning data, and DRY (J4) is a road surface HMM constructed by using data of a time series waveform of tire vibration obtained by driving in a range of braking/driving force J4 = 0.2 G to 0.4 G as learning data.

The same applies to WET (J1) to WET (J4), SNOW (J1) to SNOW (J4), and ICE (J1) to ICE (J4).

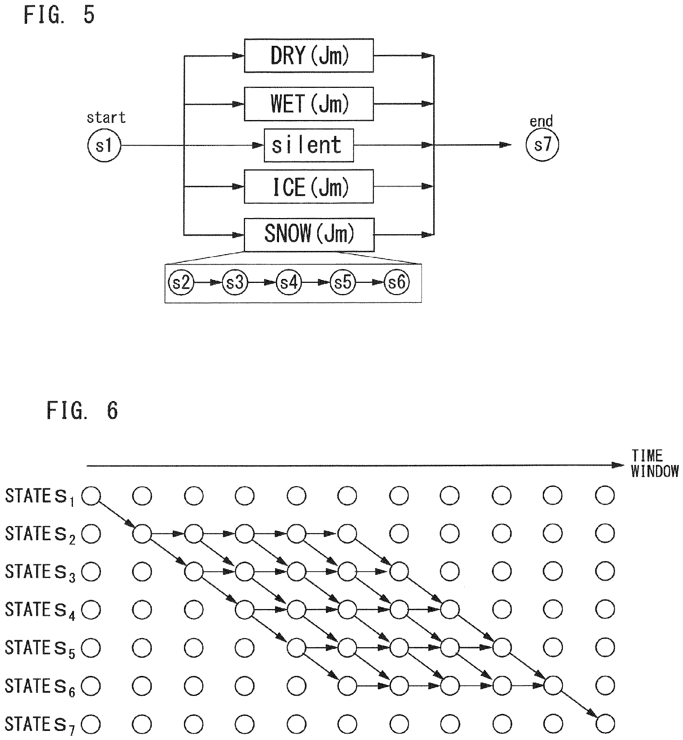

The likelihood calculation means 18 calculates likelihood of a feature vector $X_t(P)$ corrected for each of a plurality of (five herein) road surface HMMs as illustrated in Fig. 5.

The road surface HMMs for which likelihood is to be calculated are the in-road-surface HMMs (road) and the out-of-road-surface HMM in the range Jm (m is one of 1 to 4) of the braking/driving force in which the braking/driving force J output from the braking/driving force determination means 13 is included. For example, in the case where the braking/driving force is J = 0.1 G, the in-road-surface HMMs for which the likelihood is calculated are five including DRY (J3), WET (J3), SNOW (J3), ICE (J3), and the out-of-road-surface HMM (silent).

Regarding the likelihood, as the present applicants have proposed in Japanese Patent Application No. 2011-140943, first, an emission probability $P(X_t)$ is calculated for each time window by using the following formulae (1) and (2).
[Math. 1]

$$P(X_t) = \prod_{s=1}^{S} \left[ \sum_{m=1}^{M_s} c_{jsm} N(X_{st} \mid \mu_{jsm}, \sigma_{jsm}) \right] \quad \cdots\cdots (1)$$

$$N(X \mid \mu, \sigma) = \frac{1}{\sqrt{(2\pi)^n |\sigma|}} \exp\left[ -\frac{1}{2}(x-\mu)\sigma^{-1}(x-\mu)^T \right] \quad \cdots\cdots (2)$$

X; data series
t; time
S; number of states
$M_s$; number of components in mixed Gauss distribution
$c_{jsm}$; mixture ratio of m-th mixture component
$\mu$; average vector of Gauss distribution
$\sigma$; variance-covariance matrix of Gauss distribution

Since the road surface HMM has 7 states, a transition probability $\pi(X_t)$ can be represented by a $7 \times 7$ matrix. As this transition probability $\pi(X_t)$, the transition probability $a_{ij}(X_t)$ between states of the feature vector $X_t$ obtained by learning of the road surface HMM described above can be used.

Then, an appearance probability $K(X_t)$ for each time window, which is a product of the calculated emission probability $P(X_t)$ and the transition probability $\pi(X_t)$ is obtained, and a likelihood Z is obtained by multiplying the appearance probability $K(X_t)$ for each time window for all time windows. That is, the likelihood Z is obtained by $Z = \Pi \, P(X_t) \cdot$ transition probability $\pi X_t$). Alternatively, the likelihood Z may be obtained by calculating a log of the appearance probability $K(X_t)$ calculated for each time window and adding log for all time windows.

Incidentally, there are a plurality of paths (state transition series) through which the state of the road surface HMM transitions from the state $S_1$ to the state $S_7$ as illustrated in Fig. 6. That is, the likelihood Z is different between state transition series for each road surface HMM.

In this example, a state transition series $Z_M$ with the highest likelihood Z is obtained by applying a known Viterbi algorithm, this state transition series is set as a state transition series corresponding to the detected time series waveform of tire vibration, and the likelihood $Z_M$ is set as Z of the road surface HMM.

The likelihood $Z_M$ is obtained for each road surface HMM.

The road surface state determination means 19 compares respective likelihoods of a plurality of hidden Markov models calculated by the likelihood calculation means 18, and determines a road surface state corresponding to a hidden Markov model with the highest likelihood as the road surface state of a road surface on which the tire is traveling.

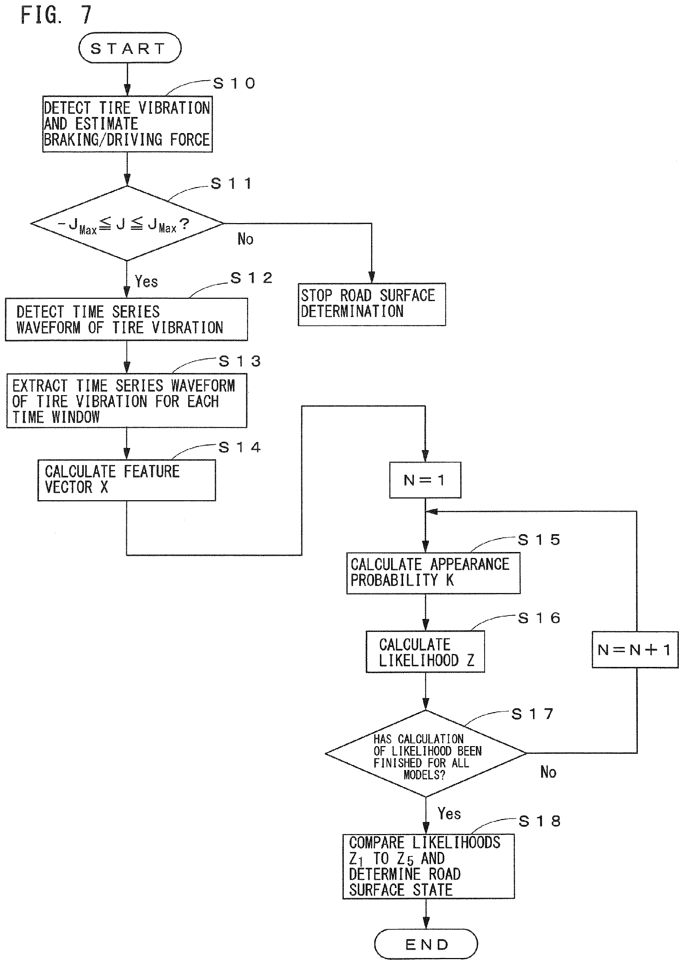

Next, a determination method of road surface state according to Embodiment 1 will be described with reference to a flowchart of Fig. 7.

First, the acceleration sensor 11 detects the vibration of the tire 1 in the tire circumferential direction during travel, and the braking/driving force estimating means 12 estimates the braking/driving force J applied to the tire (step S10).

Next, whether or not the magnitude |J| of the estimated braking/driving force J is equal to or smaller than the threshold value $J_{Max}$ ($-J_{Max} \le J \le J_{Max}$) is determined (step S11).

In the case where the magnitude |J| of the braking/driving force J is equal to or smaller than the threshold value $J_{Max}$, the process proceeds to step S12, a time series waveform in which the vibration in the tire circumferential direction, which is the output of the acceleration sensor 11, is arranged in time series is detected, then the time series waveform that is data of tire vibration is subjected to window multiplication by a preset time window, and thus a time series waveform of tire vibration for each time window is extracted (step S13).

In contrast, in the case where the estimated braking/driving force J is $J < -J_{Max}$ or $J > J_{Max}$, the extraction of time series waveform of tire vibration is stopped.

In this example, $J_{Max}$ is 0.4 G and J is 0.1 G.

In step S14, the feature vector $X_t = (x_{1t}, x_{2t}, x_{3t}, x_{4t}, x_{5t}, x_{6t})$ is calculated for each time series waveform extracted for each time window.

Next, the appearance probability $K(X_t)$ = emission probability $P(X_t) \times$ transition probability $\pi(X_t)$ is obtained for each time window for the first (N = 1) road surface HMM (step S15), and a likelihood Z1 of the first road surface HMM is calculated by multiplying the appearance probability $K(X_t)$ for all time windows (step S16). Here, in the case where J = 0.1 G holds, the first model is DRY (J3), and the other models are four of WET (J3), SNOW (J3), ICE (J3), and the out-of-road-surface HMM (silent).

Next, whether or not the calculation of the likelihood Z has been finished for all the models is determined (step S17), and in the case where the calculation is not finished, the process returns to step S15, and a likelihood Z2 of WET (J3), which is the next model, is calculated.

In the case where the calculation of the likelihood Z for all the five models has been finished, the process proceeds to step S18, and the road surface state is determined. Specifically, likelihoods Z1 to Z5 calculated for respective road surface HMMs are compared, and a road surface state corresponding to a road surface HMM with the highest likelihood is determined as the road surface state of the road surface on which the tire is traveling.

To be noted, although four ranges [Jm] of the estimated braking/driving fore J have been set in Embodiment 2 described above, for example, three ranges of [J1 (braking)] = -0.4 G to -0.1 G, [J2 (uniform)] = -0.1 G to 0.1G, and [J3 (driving)] = 0.1 G to 0.4 G may be set, or five or more ranges may be set. In addition, the threshold value $J_{Max}$ is also not limited to 0.4 G, and it suffices as long as the threshold value $J_{Max}$ is within a range of 0.2 G to 0.8G. This is because in the case of $J_{Max} < 0.2$ G, the range for correcting the influence of the braking/driving fore J is too narrow and is not practical. In addition, in the case of $J_{Max} > 0.8$ G, the braking/driving force J is large, and thus calculation of the vibration levels $x_{kt}$ of specific frequency bands, which are components of the feature vector, is difficult. Therefore, the threshold value $J_{Max}$ is preferably in the range of 0.2 G to 0.8 G.

In addition, although the calculation of the likelihood Z for determining the road surface state is performed in accordance with the estimated braking/driving force J in Embodiment 2 described above, the estimated braking/driving force J may be used only for determination of whether or not the determination of the road surface state is to be performed, and, regarding the road surface state, seventeen likelihoods Z1 to Z17 may be compared and a road surface state corresponding to a road surface HMM with the highest likelihood may be determined as the road surface state of the road surface on which the tire is traveling.


Embodiment 2

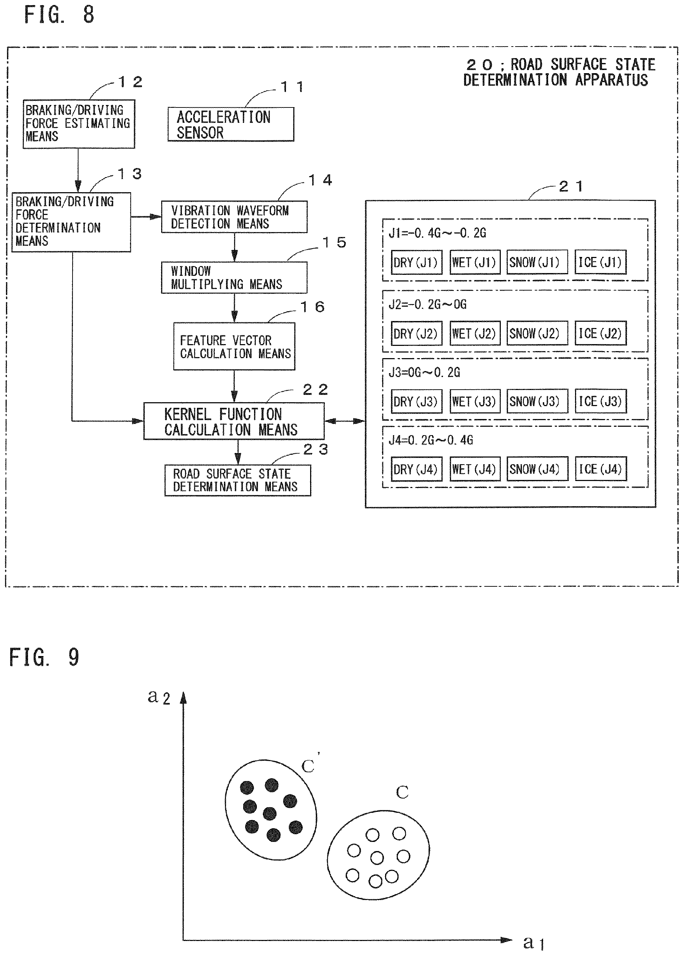

Fig. 8 is a function block diagram of a road surface state determination apparatus 20 according to Embodiment 2. In this figure, 11 represents an acceleration sensor serving as a vibration detection means, 12 represents a braking/driving force estimating means, 13 represents a braking/driving force determination means, 14 represents a vibration waveform detection means, 15 represents a window multiplying means, 16 represents a feature vector calculation means, 21 represents a storage means, 22 represents a kernel function calculation means, and 23 represents a road surface state determination means.

To be noted, each means from the acceleration sensor 11 to the feature vector calculation means 16 which have the same reference signs as in Embodiment 1 is the same as in Embodiment 1.

That is, the acceleration sensor 11 detects the vibration of the tire 1 during travel in the tire circumferential direction, and the braking/driving force estimating means 12 estimates the braking/driving force J applied to the tire.

The braking/driving force determination means 13 determines, from the estimated braking/driving force J, whether or not the state of the tire 1 is a state in which determination of the road surface state can be performed, and in the case where the magnitude |J| of the estimated braking/driving force J is equal to or smaller than the threshold value $J_{Max}$ ($-J_{Max} \leq J \leq J_{Max}$), outputs data of the braking/driving force J to the kernel function calculation means 22.

The vibration waveform detection means 14 detects a time series waveform in which vibration in the tire circumferential direction is arranged in time series.

The window multiplying means 15 subjects the time series waveform of the vibration in the tire circumferential direction to window multiplication with a preset time width (time window width), and thus extracts a time series waveform of tire vibration for each time window.

The feature vector calculation means 16 calculates a feature vector $X_t$ for each time series waveform extracted for each time window.

In this example, as the feature vector $X_t$, vibration levels (power values of a filtered wave) $x_{kt}$ (k = 1 to 6) of specific frequency bands obtained by filtering each time series waveform of tire vibration by using band pass filters of 0 to 1 kHz, 1 to 2 kHz, 2 to 3 kHz, 3 to 4 kHz, and 4 to 5 kHz are used.

Since the feature vector $X_t$ is obtained for each time window, when the total number of time windows is N, the number of feature vectors $X_t$ is also N. Hereinafter, a feature vector of a window number i will be described as $X_i$, and power values that are components of $X_i$ will be described as $x_{ki}$.

Fig. 9 is a schematic diagram illustrating an input space of the feature vector $X_i$, in which each axis represents a vibration level $a_{ik}$ of a specific frequency band, which is a feature value, and each point represents a feature vector $X_i$. Although the actual input space is a seven-dimensional space in total with the time axis because the number of specific frequency bands is 6, this figure is illustrated in two dimensions (the horizontal axis represents $a_1$ and the vertical axis represents $a_2$).

For example, assuming that the vehicle is driving on a DRY road surface, if points composing a group C can be distinguished from a group C' composed of feature vectors $X'_i$ calculated when the vehicle is driving on a SNOW road surface, whether the vehicle is driving on a DRY road surface or on a SNOW road surface can be determined.

The storage means 21 stores sixteen road surface models for separating a DRY road surface from the other road surfaces, a WET road surface from the other road surfaces, a SNOW road surface from the other road surfaces, and an ICE road surface from the other road surfaces by a discriminant function $f(x)$ representing a separating hyperplane.

The road surface models are obtained by learning by using, as input data, a road surface feature vector $Y_{ASV}(y_{jk})$, which is a feature vector for each time window calculated from a time series waveform of tire vibration obtained by driving a test car including a tire to which an acceleration sensor is attached on respective road surfaces of DRY, WET, SNOW, and ICE while changing the range of the braking/driving force $J$ applied to the tire 1.

To be noted, only one kind of tire size may be used for the learning, or a plurality of kinds of tire sizes may be used for the learning.

The suffix A of the road surface feature vector $Y_{ASV}(y_{jk})$ represents DRY, WET, SNOW, and ICE in which ranges of the braking/driving force $J$ are [J1] = -0.4 G to -0.2 G, [J2] = -0.2 G to 0 G, [J3] = 0 G to 0.2 G, and [J4] = 0.2 G to 0.4 G, that is, DRY (J1) to DRY (J4), WET (J1) to WET (J4), SNOW (J1) to SNOW (J4), and ICE (J1) to ICE (J4) illustrated in Fig. 8.

In addition, the suffix j (j = 1 to M) represents the number of time series waveforms (window number) extracted by time windows, and the suffix k indicates a component of a vector. That is, $y_{jk} = (a_{j1}, a_{j2}, a_{j3}, a_{j4}, a_{j5}, a_{j6})$ holds. In addition, SV is an abbreviation of support vector, and represents data in the vicinity of a decision boundary selected by the learning.

Hereinafter, the road surface feature vector $Y_{ASV}(y_{jk})$ will be simply described as $Y_{ASV}$.

The calculation method for each road surface feature vector $Y_{ASV}$ is similar to that of the feature vector $X_j$ described above. For example, in the case of a DRY road surface feature vector $Y_{D2SV}$, a time series waveform of tire vibration when driving on a DRY road surface while the braking/driving force $J$ in the range J2 described above is applied to the tire is subjected to window multiplication with a time width T, a time series waveform of tire vibration is extracted for each time window, and a DRY road surface feature vector $Y_{D2}$ is calculated for each time series waveform extracted for each time window. To be noted, the number of dimensions of a vector $y_i$ of the DRY road surface feature vector $Y_{D2}$ is 6 similarly to the feature vector $X_i$. Then, by performing learning by a support vector machine (SVM) by using $Y_{D2}$ as learning data, a support vector $Y_{D2SV}$ is selected. To be noted, the storage means 15 does not have to store all $Y_{D2}$, and only the selected $Y_{D2SV}$ described above may be stored. DRY road surface feature vectors $Y_{D1SV}$, $Y_{D3SV}$, and $Y_{D4SV}$, WET road surface feature vectors $Y_{W1SV}$ to $Y_{W4SV}$, SNOW road surface feature vectors $Y_{S1SV}$ to $Y_{S4SV}$, and ICE road surface feature vectors $Y_{I1SV}$ to $Y_{I4SV}$ can be obtained in a similar manner to the DRY road surface feature vector $Y_{D2SV}$.

In this example, determination of the road surface state is performed in accordance with the estimated braking/driving force $J$.

Specifically, in the case where the estimated braking/driving force $J$ is in a range of [Jm] (m = 1 to 4), whether the road surface state is a DRY road surface of a braking/driving force of [Jm], a WET road surface of a braking/driving force of [Jm], a SNOW road surface of a braking/driving force of [Jm], or an ICE road surface of a braking/driving force of [Jm] is determined.

Hereinafter, a road surface of a road surface state of a braking/driving force of [Jm] will be described as an A road surface, and road surface feature vectors $Y_{Am}$ and $Y_{AmSV}$ thereof will be described as $Y_A$ and $Y_{ASV}$.

The road surface model can be constructed by SVM by using respective road surface feature vectors $Y_A$ as learning data as proposed by the present applicants in Japanese Patent Application No. 2012-176779.

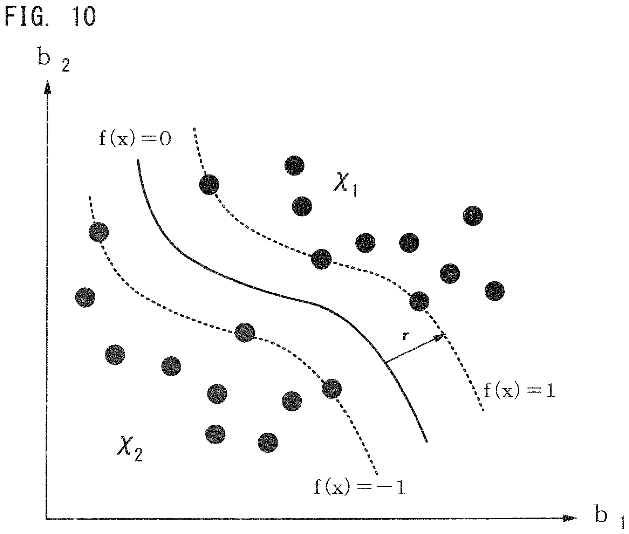

Fig. 10 is a conceptual diagram illustrating a DRY road surface feature vector $Y_{DSV}$ and a road surface feature vector $Y_{nDSV}$ not of a DRY road surface in an input space, and in this figure, black dots represent road surface feature vectors of DRY road surfaces, and dots of a lighter color represent road surface feature vectors not of a DRY surface.

To be noted, although both the DRY road surface feature vector and the road surface feature vector not of a DRY road surface are matrices, the DRY road surface feature vector and the road surface feature vector not of a DRY road surface are each represented as a two-dimensional vector in Fig. 10 for explaining how a group decision boundary is obtained.

Generally, linear separation cannot be performed at a group decision boundary. Therefore, nonlinear classification is performed on road surface feature vectors $Y_{DSV}$ and $Y_{nDSV}$ in the original input space by mapping the road surface feature vectors $Y_{DSV}$ and $Y_{nDSV}$ in a feature space of a higher dimension by nonlinear mapping $\varphi$ by using a kernel method.

Specifically, a discriminant function $f(x) = w^T\varphi(x) - b$ most suitable for identifying data is obtained by using a data set $X = (x_1, x_2, ... x_n)$ and a belonging class $z = \{1, -1\}$. Here, the data is the road surface feature vectors $Y_{Dj}$ and $Y_{nDj}$, a belonging class z = 1 indicates data of a DRY road surface indicated by $\chi_1$ in the figure, and z = -1 indicates data of a road surface different from a DRY road surface indicated by $\chi_2$. In addition, w is a weight coefficient, b is a constant, and $f(x) = 0$ corresponds to the decision boundary.

The discriminant function $f(x) = w^T\varphi(x) - b$ is optimized by using, for example, a method of Lagrange multiplier.

The optimization problem can be replaced by the following formulae (3) and (4).
[Math. 2]

$$\text{maximize} \quad \sum_{\alpha} \lambda_{\alpha} - \frac{1}{2} \sum_{\alpha,\beta} \lambda_{\alpha} \lambda_{\beta} z_{\alpha} z_{\beta} \, \phi(x_{\alpha}) \, \phi(x_{\beta}) \quad \cdots\cdots (3)$$

$$\text{subject to} \quad \sum_{\alpha} \lambda_{\alpha} z_{\alpha} = 0 \, , \, \lambda_{\alpha} > 0 \quad \cdots\cdots (4)$$

Here, $\alpha$ and $\beta$ are indices of a plurality of pieces of learning data. In addition, $\lambda$ is a Lagrange multiplier which satisfies $\lambda > 0$.

In this case, the discriminant function $f(x) = w^T \varphi(x) - b$ can be non-linearized by replacing an inner product $\varphi(x_{\alpha})\varphi(x_{\beta})$ by a kernel function $K(x_{\alpha}, x_{\beta})$. To be noted, $\varphi(x_{\alpha})\varphi(x_{\beta})$ is an inner product after mapping $x_{\alpha}$ and $x_{\beta}$ in a high-dimension space by mapping $\varphi$.

The Lagrange multiplier $\lambda$ can be obtained by using an optimization algorithm such as a gradient descent method or sequential minimal optimization (SMO) on the formula (2) described above. In this case, since a kernel function is used, the high-dimension inner product does not have to be directly obtained. Therefore, the calculation time can be greatly reduced.

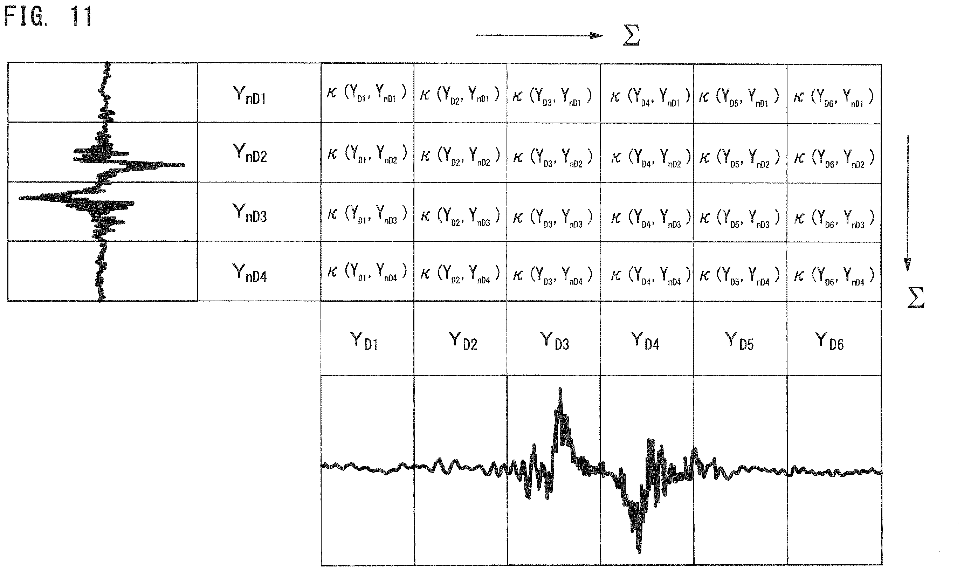

In this example, a global alignment kernel function (GA kernel) is used as the kernel function $K(x_{\alpha}, x_{\beta})$. The GA kernel $K(x_{\alpha}, x_{\beta})$ is a function constituted by the sum or the product of all local kernels $\kappa_{ij}(x_i, x_j)$ representing a degree of similarity between the DRY road surface feature vector $x_i = Y_{Di}$ and the road surface feature vector $x_j = Y_{nDj}$ not of a DRY road surface as shown in Fig. 11 and the following formulae (5) and (6), and can directly compare time series waveforms of different time lengths.
[Math. 3]

$$K(x_{\alpha}, x_{\beta}) = \sum_{i=1}^{m} \sum_{j=1}^{n} \kappa_{ij}(x_{\alpha i}, x_{\beta j}) \quad \cdots\cdots (5)$$

$$\kappa_{ij}(x_{\alpha i}, x_{\beta j}) = \exp\left( - \frac{\|x_{\alpha i} - x_{\beta j}\|^2}{\sigma^2} \right) \quad \cdots\cdots (6)$$

wherein $\|x_{\alpha i} - x_{\beta j}\|$ is a distance (norm) between feature vectors, and $\sigma$ is a constant.

The local kernel $\kappa_{ij}(x_i, x_j)$ is obtained for each window of a time interval T.

To be noted, Fig. 11 illustrates an example in which a GA kernel of the DRY road surface feature vector $Y_{Dj}$ whose number of time windows is 6 and the road surface feature vector $Y_{nDj}$ not of a DRY road surface whose number of time windows is 4 is obtained.

The local kernel $\kappa_{ij}(x_i, x_j)$ is obtained for each window at a time interval T.

To distinguish the DRY road surface and the road surface different from the DRY road surface, the DRY road surface and the road surface different from the DRY road surface can be distinguished from each other with a high accuracy by providing a margin to the discriminant function $f(x)$, which is a separating hyperplane that separates the DRY road surface feature vector $Y_{Dj}$ and the road surface feature vector $Y_{nDj}$ not of the DRY road surface.

The margin refers to a distance from the separating hyperplane to the closest sample (support vector), the separating hyperplane, which is the decision boundary, is $f(x) = 0$. All the DRY road surface feature vectors $Y_{Dj}$ are in a region of $f(x) \geq +1$, and the road surface feature vectors $Y_{nDj}$ not of the DRY road surface are in a region of $f(x) \leq -1$.

The DRY road surface model that distinguishes the DRY road surface from the other road surfaces is an input space including a support vector $Y_{DSV}$ in a distance of $f(x) = +1$ and a support vector $Y_{nDSV}$ in a distance of $f(x) = -1$. Generally, $Y_{DSV}$ and $Y_{nDSV}$ described above are present in plural numbers.

The same applies to a WET model that distinguishes the WET road surface from the other road surfaces, a SNOW model that distinguishes the SNOW road surface from the other road surfaces, and an ICE model that distinguishes the ICE road surface from the other road surfaces.

The kernel function calculation means 22 respectively calculates GA kernels $K_D(X, Y)$, $K_W(X, Y)$, $K_S(X, Y)$, and $K_I(X, Y)$ from the feature vector $X$; calculated by the feature vector calculation means 16 and from respective support vectors $Y_{ASV}$ and $Y_{nASV}$ (A = D, W, S, and I) of the DRY model, the WET model, the SNOW model, and the ICE model stored in the storage means 21.

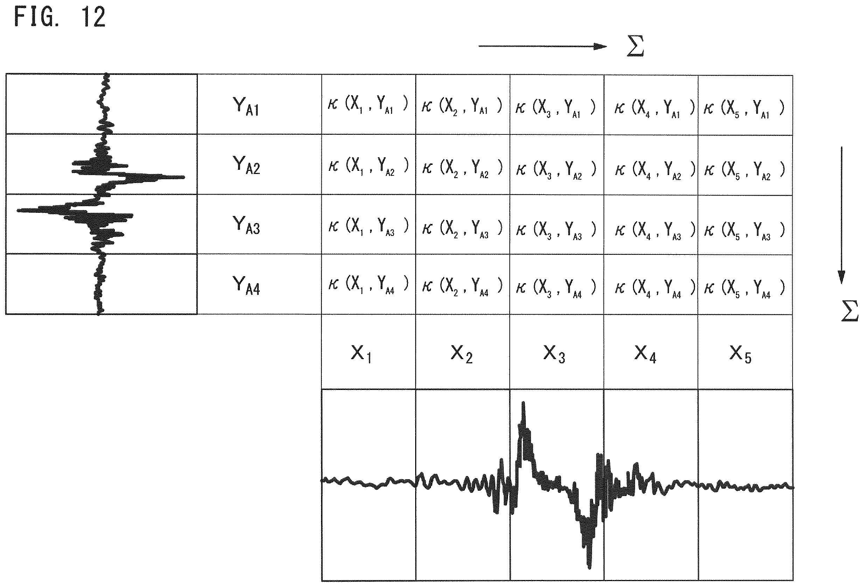

As illustrated in Fig. 12, the GA kernel $K(X, Y)$ is a function constituted by the sum or the product of all local kernels $\kappa_{ij}(X_i, Y_j)$ when $x_i$ is the feature vector $X_i$ and $x_j$ is the road surface vector $Y_{Aj}$ or $Y_{nAj}$ in [Math. 3] described above, and can directly compare time series waveforms of different time lengths. To be noted, this figure illustrates an example in which $x_j$ is the road surface feature vector $Y_{Aj}$, the number of time windows of the feature vector $X_i$ is $n = 5$, and the number of time windows of the road surface feature vector $Y_{Aj}$ is $m = 4$.

As in this example, the degree of similarity between feature vectors $X_i$ and $Y_{Aj}$ (or between $X_i$ and $Y_{nAj}$) can be obtained even in the case where the number $n$ of time series waveforms of time windows in the case of obtaining the feature vector $X_i$ and the number $m$ of time series waveforms of time windows in the case of obtaining the road surface feature vector $Y_{Aj}$ (or $Y_{nAj}$) are different.

The road surface state determination means 23 determines the road surface state on the basis of values of four discriminant functions $f_A(x)$ (A = D, W, S, and I) using kernel functions $K_A(X, Y)$ shown in the following formulae (7) to (10).

[Math. 4]

$$f_D = \sum_{\alpha=1}^{N_{DSV}} \lambda_{D\alpha} z_{D\alpha} K_D (X, Y_\alpha) - b_D \quad \cdots\cdots (7)$$

$$f_W = \sum_{\alpha=1}^{N_{WSV}} \lambda_{W\alpha} z_{W\alpha} K_W (X, Y_\alpha) - b_W \quad \cdots\cdots (8)$$

$$f_S = \sum_{\alpha=1}^{N_{SSV}} \lambda_{S\alpha} z_{S\alpha} K_S (X, Y_\alpha) - b_S \quad \cdots\cdots (9)$$

$$f_I = \sum_{\alpha=1}^{N_{ISV}} \lambda_{I\alpha} z_{I\alpha} K_I (X, Y_\alpha) - b_I \quad \cdots\cdots (10)$$

$f_D$ is a discriminant function for distinguishing the DRY road surface from the other road surfaces, $f_W$ is a discriminant function for distinguishing the WET road surface from the other road surfaces, $f_S$ is a discriminant function for distinguishing the SNOW road surface from the other road surfaces, and $f_I$ is a discriminant function for distinguishing the ICE road surface from the other road surfaces.

In addition, $N_{DSV}$ is the number of support vectors of the DRY model, $N_{WSV}$ is the number of support vectors of the WET model, $N_{SSV}$ is the number of support vectors of the SNOW model, and $N_{ISV}$ is the number of support vectors of the ICE model.

In this example, the discriminant functions $f_D$, $f_W$, $f_S$, and $f_I$ are respectively calculated, and the road surface state is determined from the discriminant function indicating the largest value among the calculated discriminant functions $f_A$.

That is, in the case where the estimated braking/driving force J is in the range of [J1] = -0.4 G to -0.2 G, discriminant functions $f_{D1}$, $f_{W1}$, $f_{S1}$, and $f_{I1}$ are respectively calculated, and the road surface state is determined from the discriminant function indicating the largest value among calculated discriminant functions $f_{A1}$. In the case where the estimated braking/driving force J is in the range of [J2] = -0.2 G to 0 G, discriminant functions $f_{D2}$, $f_{W2}$, $f_{S2}$, and $f_{I2}$ are respectively calculated, and the road surface state is determined from the discriminant function indicating the largest value among calculated discriminant functions $f_{A2}$.

The same applies to the cases where the braking/driving force J is [J3] = 0 G to 0.2 G and [J4] = 0.2 G to 0.4 G.

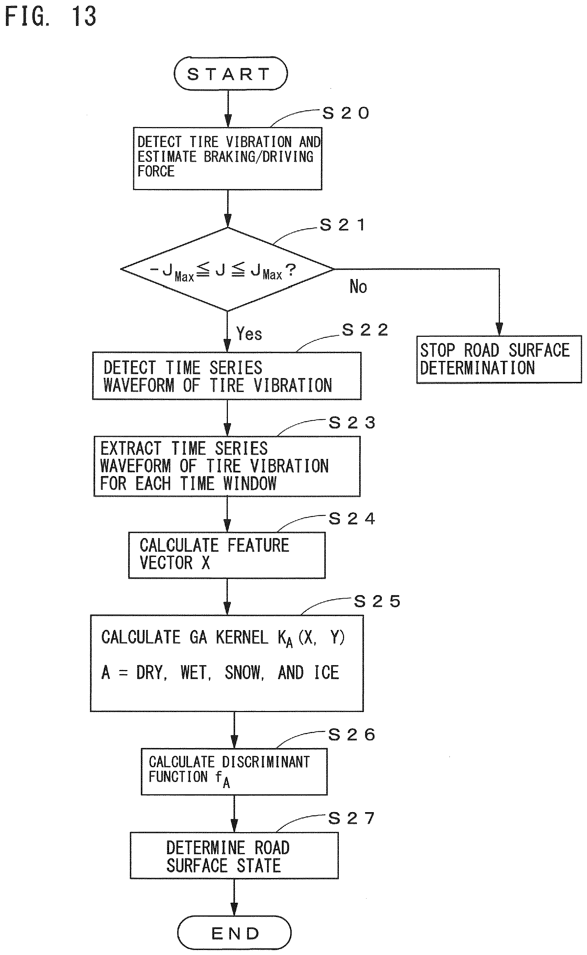

Next, a determination method of the road surface state according to Embodiment 3 will be described with reference to a flowchart of Fig. 13.

First, the acceleration sensor 11 detects the vibration of the tire 1 in the tire circumferential direction during travel, and the braking/driving force estimating means 12 estimates the braking/driving force J applied to the tire (step S20).

Next, whether or not the magnitude $|J|$ of the estimated braking/driving force J is equal to or smaller than the threshold value $J_{Max}$ ($-J_{Max} \leq J \leq J_{Max}$) is determined (step S21).

In the case where the magnitude |J| of the braking/driving force J is equal to or smaller than the threshold value $J_{Max}$, the process proceeds to step S22, a time series waveform in which the vibration in the tire circumferential direction, which is the output of the acceleration sensor 11, is arranged in time series is detected, then the time series waveform that is data of tire vibration is subjected to window multiplication by a preset time window, and thus a time series waveform of tire vibration for each time window is extracted (step S23).

In contrast, in the case where the estimated braking/driving force J satisfies $J < -J_{Max}$ or $J > J_{Max}$, the extraction of time series waveform of tire vibration is stopped.

In this example, $J_{Max}$ is 0.4 G and J is 0.1 G.

In step S24, the feature vector $X_t = (x_{1t}, x_{2t}, x_{3t}, x_{4t}, x_{5t}, x_{6t})$ is calculated for each time series waveform extracted for each time window.

Next, the local kernels $\kappa_{ij}(X_i, Y_j)$ are calculated from the feature vector $X_i$, the estimated braking/driving force J, and the support vector $Y_{Ak}$ of the road surface model stored in the storage means 15, then the sum of all the local kernels $\kappa_{ij}(X_i, Y_j)$ is obtained, and global alignment kernel functions $K_D(X, Y)$, $K_W(X, Y)$, $K_S(X, Y)$, and $K_I(X, Y)$ are respectively calculated (step S25).

To be noted, although, strictly speaking, the support vector is $Y_{Amk}$ and the global alignment kernel functions are $K_{Dm}(X, Y)$, $K_{Wm}(X, Y)$, $K_{Sm}(X, Y)$, and $K_{Im}(X, Y)$ in the case where the range of the estimated braking/driving force J is [Jm], description will be given below by omitting the suffix m.

Next, four discriminant functions $f_D(x)$, $f_W(x)$, $f_S(x)$, and $f_I(x)$ using the kernel functions $K_A(X, Y)$ are respectively calculated (step S26), then the values of the calculated discriminant functions $f_A(x)$ are compared, and the road surface state of the discriminant function indicating the largest value is determined as the road surface state of the road surface on which the tire 1 is traveling (step S27).

To be noted, although the determination of road surface state is performed in accordance with the estimated braking/driving force J in Embodiment 3 described above, a configuration in which the estimated braking/driving force J is used only for determination of whether or not determination of the road surface state is to be performed and the road surface state is determined by using sixteen discriminant functions $f_{D1}$ to $f_{D4}$, $f_{W1}$ to $f_{W4}$, $f_{S1}$ to $f_{S4}$, and $f_{I1}$ to $f_{I4}$ may be employed.

Embodiments of the present invention described above can be summarized as follows. That is, the road surface state determination method of the present invention is:

(1) a road surface state determination method including a step (a) of detecting vibration of a tire during travel, a step (b) of extracting a time series waveform of the detected vibration of the tire, a step (c) of extracting a time series waveform for each time window by multiplying the time series waveform of the tire vibration by a window function of a predetermined time width, a step (d) of calculating each feature vector from the time series waveform for each time window, and a step (e) of determining a road surface state during travel by using the feature vector for each time window calculated in the step (d) and a road surface model constructed by using, as data for learning, data of time series waveforms of tire vibration obtained by driving, on road surfaces of a plurality of road surface states, a vehicle including a tire provided with an acceleration sensor, wherein the road surface model is constructed in a plural number in accordance with magnitudes of a braking/driving force, wherein a step of estimating a braking/driving force applied to the tire is provided, and wherein, in the step (e), a state of a road surface is determined by using the feature vector and a road surface model corresponding to a magnitude of the estimated braking/driving force. When determining a road surface state by using a road surface model as described above, by constructing a plurality of road surface models in accordance with the magnitude of a braking/driving force, the road surface state can be determined with a high accuracy even in the case where a braking/driving force is applied to a tire.

(2) The road surface models are hidden Markov models constituted in advance for respective road surface states, and in the step (e), a likelihood of the feature vector is calculated for each of the plurality of hidden Markov models, and the road surface state is determined by using the calculated likelihood.
As described above, since the present invention is applied to road surface determination using a hidden Markov model, the determination accuracy of the road surface state can be greatly improved.

(3) In the step (e), a kernel function is calculated from the feature vector for each time window calculated in the step (d) and a road surface feature vector that is a feature vector for each time window calculated from a time series waveform of tire vibration obtained for each road surface state calculated in advance, and then the road surface state is determined on a basis of a discriminant function that identifies the road surface model by using the kernel function.
As described above, since the present invention is applied to road surface determination using a kernel function, the determination accuracy of the road surface state can be greatly improved.

(4) Determination of the road surface state is not performed in a case where a magnitude of the estimated braking/driving force exceeds a preset range.

As described above, since a configuration in which the determination of road surface state is not performed in the case where the magnitude of the estimated braking/driving force exceeds a preset range is employed, erroneous determination of the road surface state can be prevented.

REFERENCE SIGNS LIST

1: tire, 2: inner liner portion, 3: tread, 4: wheel rim, 5: tire air chamber, 10: road surface state determination apparatus, 11: acceleration sensor, 12: braking/driving force estimating means, 13: braking/driving force determination means, 14: vibration waveform detection means, 15: window multiplying means, 16: feature vector calculation means, 17: storage means, 18: likelihood calculation means, 19: road surface state determination means

**Claims**

1.  A road surface state determination method comprising:

    a step (a) of detecting vibration of a tire during travel;
    a step (b) of extracting a time series waveform of the detected vibration of the tire;
    a step (c) of extracting a time series waveform for each time window by multiplying the time series waveform of the tire vibration by a window function of a predetermined time width;
    a step (d) of calculating each feature vector from the time series waveform for each time window; and
    a step (e) of determining a road surface state during travel by using the feature vector for each time window calculated in the step (d) and a road surface model constructed by using, as data for learning, data of time series waveforms of tire vibration obtained by driving, on road surfaces of a plurality of road surface states, a vehicle including a tire provided with an acceleration sensor, **characterized in that** the road surface model is constructed in a plural number in accordance with magnitudes of a braking/driving force,
    wherein a step of estimating a braking/driving force applied to the tire is provided, and
    wherein, in the step (e), a state of a road surface is determined by using the feature vector and a road surface model corresponding to a magnitude of the estimated braking/driving force.

2.  The road surface determination method according to claim 1,
    wherein the road surface models are hidden Markov models constituted in advance for respective road surface states, and
    wherein, in the step (e), a likelihood of the feature vector is calculated for each of the plurality of hidden Markov models, and the road surface state is determined by using the calculated likelihood.

3.  The road surface state determination method according to claim 1, wherein, in the step (e), a kernel function is calculated from the feature vector for each time window calculated in the step (d) and a road surface feature vector that is a feature vector for each time window calculated from a time series waveform of tire vibration obtained for each road surface state calculated in advance, and then the road surface state is determined on a basis of a discriminant function that identifies the road surface model by using the kernel function.

4.  The road surface determination method according to any one of claims 1 to 3, wherein determination of the road surface state is not performed in a case where a magnitude of the estimated braking/driving force exceeds a preset range.

**Patentansprüche**

1.  Verfahren zum Bestimmen des Straßenoberflächenzustandes, das Folgendes umfasst:

    einen Schritt (a) des Erfassens der Vibration eines Reifens während der Fahrt,
    einen Schritt (b) des Extrahierens einer Zeitreihen-Wellenform der erfassten Vibration des Reifens,
    einen Schritt (c) des Extrahierens einer Zeitreihen-Wellenform für jedes Zeitfenster durch Multiplizieren der Zeitreihen-Wellenform der Reifenvibration mit einer Fensterfunktion einer vorbestimmten Zeitbreite,
    einen Schritt (d) des Berechnens jedes Merkmalsvektors aus der Zeitreihen-Wellenform für jedes Zeitfenster; und
    einen Schritt (e) des Bestimmens des Straßenoberflächenzustandes während der Fahrt durch Verwenden des in dem Schritt (d) berechneten Merkmalsvektors für jedes Zeitfenster und eines Straßenoberflächenmodells, konstruiert durch Verwenden von Daten von Zeitreihen-Wellenformen der Reifenvibration, erhalten durch Fahren eines Fahrzeugs, das einen Reifen einschließt, der mit einem Beschleunigungssensor versehen ist, auf Straßenoberflächen mit mehreren Straßenoberflächenzuständen, als Daten zum Lernen,

**dadurch gekennzeichnet, dass** das Straßenoberflächenmodell in einer Vielzahl in Übereinstimmung mit Größen einer Brems-/Antriebskraft konstruiert wird,

wobei ein Schritt des Schätzens einer Brems-/Antriebskraft, die auf den Reifen ausgeübt wird, bereitgestellt wird und

wobei, in dem Schritt (e), ein Zustand einer Straßenoberfläche durch Verwenden des Merkmalsvektors und eines Straßenoberflächenmodells, das einer Größe der geschätzten Brems-/Antriebskraft entspricht, bestimmt wird.

2. Verfahren zum Bestimmen des Straßenoberflächenzustandes nach Anspruch 1,
wobei die Straßenoberflächenmodelle verborgene Markow-Modelle sind, die im Voraus für jeweilige Straßenoberflächenzustände erzeugt werden, und
wobei, in dem Schritt (e), die Wahrscheinlichkeit des Merkmalsvektors für jedes der mehreren verborgenen Merkmalsmodelle berechnet wird und der Straßenoberflächenzustand durch Verwenden der berechneten Wahrscheinlichkeit bestimmt wird.

3. Verfahren zum Bestimmen des Straßenoberflächenzustandes nach Anspruch 1, wobei, in dem Schritt (e), eine Kernel-Funktion berechnet wird aus dem Merkmalsvektor für jedes Zeitfenster, der in dem Schritt (d) berechnet wird, und einem Straßenoberflächen-Merkmalsvektor, der ein Merkmalsvektor für jedes Zeitfenster ist, der aus einer Zeitreihen-Wellenform der Reifenvibration berechnet wird, der für jeden Straßenoberflächenzustand erhalten wird, der im Voraus berechnet wird, und danach der Straßenoberflächenzustand auf Grundlage einer Diskriminantenfunktion bestimmt wird, die das Straßenoberflächenmodell durch Verwenden der Kernel-Funktion identifiziert.

4. Verfahren zum Bestimmen des Straßenoberflächenzustandes nach einem der Ansprüche 1 bis 3, wobei das Bestimmen des Straßenoberflächenzustandes in einem Fall, in dem eine Größe der geschätzten Brems-/Antriebskraft einen vorbestimmten Bereich überschreitet, nicht durchgeführt wird.

**Revendications**

1. Procédé de détermination de l'état d'une route, comprenant :

une étape (a) de détection des vibrations d'un bandage pneumatique au cours du roulement ;
une étape (b) d'extraction d'une forme d'onde de série chronologique des vibrations détectées du bandage pneumatique ;
une étape (c) d'extraction d'une forme d'onde de série chronologique pour chaque fenêtre temporelle en multipliant la forme d'onde de série chronologique des vibrations du bandage pneumatique par une fonction de fenêtre d'une largeur de temps prédéterminée ;
une étape (d) de calcul de chaque vecteur caractéristique à partir de la forme d'onde de série chronologique pour chaque fenêtre de temps ; et
une étape (e) de détermination d'un état de la surface de la route au cours du roulement en utilisant le vecteur caractéristique pour chaque fenêtre temporelle calculée lors de l'étape (d), et d'un modèle de la surface de la route construit en utilisant, comme données d'apprentissage, des données de formes d'onde de série chronologique des vibrations du bandage pneumatique obtenues par la conduite, sur des surfaces de route de plusieurs états de surface de la route, d'un véhicule incluant un bandage pneumatique équipé d'un capteur d'accélération ;
**caractérisé en ce que** :
le modèle de la surface de la route est construit en un nombre pluriel en fonction des intensités de la force de freinage/de la force motrice.

2. Procédé de détermination de l'état d'une roue selon la revendication 1,
dans lequel les modèles de la surface de la route sont des modèles de Markov cachés constitués d'avance pour des états respectifs de la surface de la route ; et
dans lequel, au cours de l'étape (e), une probabilité du vecteur caractéristique est calculée pour chacun des modèles de Markov cachés, l'état de la surface de la route étant déterminé en utilisant la probabilité calculée.

**3.** Procédé de détermination de l'état de la surface d'une route selon la revendication 1, dans lequel, au cours de l'étape (e), une fonction de noyau est calculée sur la base du vecteur caractéristique pour chaque fenêtre temporelle calculée au cours de l'étape (d) et d'un vecteur caractéristique de la surface de la route, constituant un vecteur caractéristique pour chaque fenêtre temporelle calculée sur la base d'une forme d'onde de série chronologique des vibrations du bandage pneumatique obtenu pour chaque état de la surface de la route calculé d'avance, l'état de la surface de la route étant ensuite déterminé sur la base d'une fonction discriminante identifiant le modèle de la surface de la route en utilisant la fonction de noyau.

**4.** Procédé de détermination de la surface d'une route selon l'une quelconque des revendications 1 à 3, dans lequel la détermination de l'état de la surface de la route n'est pas effectuée dans le cas où une intensité de la force de freinage/de la force motrice estimée dépasse un intervalle préréglé.

## FIG. 1

10 ; ROAD SURFACE STATE DETERMINATION APPARATUS

- 12 BRAKING/DRIVING FORCE ESTIMATING MEANS
- 11 ACCELERATION SENSOR
- 13 BRAKING/DRIVING FORCE DETERMINATION MEANS
- 14 VIBRATION WAVEFORM DETECTION MEANS
- 15 WINDOW MULTIPLYING MEANS
- 16 FEATURE VECTOR CALCULATION MEANS
- 18 LIKELIHOOD CALCULATION MEANS
- 19 ROAD SURFACE STATE DETERMINATION MEANS

17 IN-ROAD-SURFACE HMM

J1=−0.4G～−0.2G | DRY(J1) | WET(J1) | SNOW(J1) | ICE(J1)

J2=−0.2G～0G | DRY(J2) | WET(J2) | SNOW(J2) | ICE(J2)

J3=0G～0.2G | DRY(J3) | WET(J3) | SNOW(J3) | ICE(J3)

J4=0.2G～0.4G | DRY(J4) | WET(J4) | SNOW(J4) | ICE(J4)

OUT-OF-ROAD-SURFACE HMM

## FIG. 2

FIG. 3

$X_{t1}$ $X_{t2}$ $X_{t3}$ $X_{t4}$
$(X_1)$ $(X_2)$ $(X_3)$ $(X_4)$

FIG. 4

$a_{22}$
$b_{22}(x)$

$a_{33}$
$b_{33}(x)$

$a_{44}$
$b_{44}(x)$

$a_{55}$
$b_{55}(x)$

$a_{66}$
$b_{66}(x)$

start
S1 → S2 → S3 → S4 → S5 → S6 → S7
end

$a_{12}$
$b_{12}(x)$

$a_{23}$
$b_{23}(x)$

$a_{34}$
$b_{34}(x)$

$a_{45}$
$b_{45}(x)$

$a_{56}$
$b_{56}(x)$

FIG. 5

FIG. 6

FIG. 7

```
                    ┌─────────────┐
                    │   START     │
                    └─────────────┘
                           │
                           ▼
              ┌──────────────────────────┐  S 1 0
              │ DETECT TIRE VIBRATION    │
              │ AND ESTIMATE             │
              │ BRAKING/DRIVING FORCE    │
              └──────────────────────────┘
                           │
                           ▼
                   ◇ S 1 1
          -J_Max ≦ J ≦ J_Max ?  ───── No ──┐
                   ◇                         │
                   │ Yes                     ▼
                   ▼              ┌──────────────────────┐
        ┌──────────────────┐ S12 │ STOP ROAD SURFACE    │
        │ DETECT TIME SERIES│    │ DETERMINATION        │
        │ WAVEFORM OF TIRE  │    └──────────────────────┘
        │ VIBRATION         │
        └──────────────────┘
```

FIG. 8

20 ; ROAD SURFACE STATE
DETERMINATION APPARATUS

| BRAKING/DRIVING FORCE ESTIMATING MEANS | 12 |
| ACCELERATION SENSOR | 11 |
| BRAKING/DRIVING FORCE DETERMINATION MEANS | 13 |
| VIBRATION WAVEFORM DETECTION MEANS | 14 |
| WINDOW MULTIPLYING MEANS | 15 |
| FEATURE VECTOR CALCULATION MEANS | 16 |
| KERNEL FUNCTION CALCULATION MEANS | 22 |
| ROAD SURFACE STATE DETERMINATION MEANS | 23 |

21

J1=-0.4G～-0.2G
DRY(J1)  WET(J1)  SNOW(J1)  ICE(J1)

J2=-0.2G～0G
DRY(J2)  WET(J2)  SNOW(J2)  ICE(J2)

J3=0G～0.2G
DRY(J3)  WET(J3)  SNOW(J3)  ICE(J3)

J4=0.2G～0.4G
DRY(J4)  WET(J4)  SNOW(J4)  ICE(J4)

FIG. 9

$a_2$

$C'$

$C$

$a_1$

FIG. 10

FIG. 11

| | $Y_{nD1}$ | $\kappa(Y_{D1}, Y_{nD1})$ | $\kappa(Y_{D2}, Y_{nD1})$ | $\kappa(Y_{D3}, Y_{nD1})$ | $\kappa(Y_{D4}, Y_{nD1})$ | $\kappa(Y_{D5}, Y_{nD1})$ | $\kappa(Y_{D6}, Y_{nD1})$ |
| | $Y_{nD2}$ | $\kappa(Y_{D1}, Y_{nD2})$ | $\kappa(Y_{D2}, Y_{nD2})$ | $\kappa(Y_{D3}, Y_{nD2})$ | $\kappa(Y_{D4}, Y_{nD2})$ | $\kappa(Y_{D5}, Y_{nD2})$ | $\kappa(Y_{D6}, Y_{nD2})$ |
| | $Y_{nD3}$ | $\kappa(Y_{D1}, Y_{nD3})$ | $\kappa(Y_{D2}, Y_{nD3})$ | $\kappa(Y_{D3}, Y_{nD3})$ | $\kappa(Y_{D4}, Y_{nD3})$ | $\kappa(Y_{D5}, Y_{nD3})$ | $\kappa(Y_{D6}, Y_{nD3})$ |
| | $Y_{nD4}$ | $\kappa(Y_{D1}, Y_{nD4})$ | $\kappa(Y_{D2}, Y_{nD4})$ | $\kappa(Y_{D3}, Y_{nD4})$ | $\kappa(Y_{D4}, Y_{nD4})$ | $\kappa(Y_{D5}, Y_{nD4})$ | $\kappa(Y_{D6}, Y_{nD4})$ |
| | | $Y_{D1}$ | $Y_{D2}$ | $Y_{D3}$ | $Y_{D4}$ | $Y_{D5}$ | $Y_{D6}$ |

$\Sigma$

$\Sigma$

EP 3 480 629 B1

# FIG. 12

$\longrightarrow \Sigma$

| | | $Y_{A1}$ | $\kappa(X_1, Y_{A1})$ | $\kappa(X_2, Y_{A1})$ | $\kappa(X_3, Y_{A1})$ | $\kappa(X_4, Y_{A1})$ | $\kappa(X_5, Y_{A1})$ |
|---|---|---|---|---|---|---|---|
| | | $Y_{A2}$ | $\kappa(X_1, Y_{A2})$ | $\kappa(X_2, Y_{A2})$ | $\kappa(X_3, Y_{A2})$ | $\kappa(X_4, Y_{A2})$ | $\kappa(X_5, Y_{A2})$ |
| | | $Y_{A3}$ | $\kappa(X_1, Y_{A3})$ | $\kappa(X_2, Y_{A3})$ | $\kappa(X_3, Y_{A3})$ | $\kappa(X_4, Y_{A3})$ | $\kappa(X_5, Y_{A3})$ |
| | | $Y_{A4}$ | $\kappa(X_1, Y_{A4})$ | $\kappa(X_2, Y_{A4})$ | $\kappa(X_3, Y_{A4})$ | $\kappa(X_4, Y_{A4})$ | $\kappa(X_5, Y_{A4})$ |
| | | | $X_1$ | $X_2$ | $X_3$ | $X_4$ | $X_5$ |

$\downarrow \Sigma$

EP 3 480 629 B1

## FIG. 13

```
              ┌──────────────┐
              │   START      │
              └──────────────┘
                     │
                     ▼            ╭─ S20
         ┌────────────────────────┐
         │ DETECT TIRE VIBRATION AND│
         │ ESTIMATE BRAKING/DRIVING │
         │ FORCE                    │
         └────────────────────────┘
                     │
                     ▼            ╭─ S21
              ◇─────────────────◇
             ⟨ −J_Max ≦ J ≦ J_Max ? ⟩──── No ──┐
              ◇─────────────────◇              │
                     │ Yes     ╭─ S22          ▼
                     ▼                 ┌─────────────────┐
         ┌────────────────────────┐    │ STOP ROAD SURFACE│
         │ DETECT TIME SERIES     │    │ DETERMINATION    │
         │ WAVEFORM OF TIRE VIBRATION│  └─────────────────┘
         └────────────────────────┘
                     │            ╭─ S23
                     ▼
         ┌────────────────────────┐
         │ EXTRACT TIME SERIES    │
         │ WAVEFORM OF TIRE VIBRATION│
         │ FOR EACH TIME WINDOW    │
         └────────────────────────┘
                     │            ╭─ S24
                     ▼
         ┌────────────────────────┐
         │ CALCULATE FEATURE      │
         │ VECTOR X               │
         └────────────────────────┘
                     │            ╭─ S25
                     ▼
         ┌────────────────────────┐
         │ CALCULATE GA KERNEL K_A(X, Y)│
         │ A = DRY, WET, SNOW, AND ICE │
         └────────────────────────┘
                     │            ╭─ S26
                     ▼
         ┌────────────────────────┐
         │ CALCULATE DISCRIMINANT │
         │ FUNCTION f_A           │
         └────────────────────────┘
                     │            ╭─ S27
                     ▼
         ┌────────────────────────┐
         │ DETERMINE ROAD         │
         │ SURFACE STATE          │
         └────────────────────────┘
                     │
                     ▼
              ┌──────────────┐
              │    END       │
              └──────────────┘
```

Decision: $-J_{Max} \leq J \leq J_{Max}$ ?

S25: CALCULATE GA KERNEL $K_A(X, Y)$, $A = $ DRY, WET, SNOW, AND ICE

S26: CALCULATE DISCRIMINANT FUNCTION $f_A$

**EP 3 480 629 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013006533 A
- JP 2014035279 A
- EP 2883772 A1
- JP 2011140943 A
- JP 2012176779 A